# EUROPEAN PATENT APPLICATION

(11) **EP 2 151 989 A1**
(43) Date of publication of application: **10.02.2010**
(21) Application number: 08014154.2
(22) Date of filing: 07.08.2008
(51) Int. Cl.: H04N 5/00, H04N 7/24, H04N 7/16

(54) **Video and audio sharing device**

(71) Applicant: Jow Tong Technology Co., Ltd., Yung Kang City, Tainan Hsien, Taiwan (CN)
(72) Inventor: Lin, Chung-Hung, Huanchang Village Syuejia Township Tainan County (TW)
(74) Representative: Kador & Partner

(57) **Abstract**

A sharing device includes a central processing unit, an input jack unit, a video and audio coding and decoding unit, a video and audio output module, , and a wireless receiving and transmitting unit; the input jack unit includes USB ports, and a RJ-45 jack; the video and audio output module has output jacks to be connected to broadcasting devices for images and audio signals to be output and broadcasted; the sharing device can be connected to internet to obtain video and audio data; or alternatively, the sharing device can obtain video and audio signals from other broadband routers, video and audio sharing devices, IP sharers or wireless stations; the sharing device can be connected to internet to serve as a router so that nearby computers can have access to internet; several such sharing devices can be positioned within transmission range of each other to form a local area network.

## Description

### BACKGROUND OF THE INVENTION

### 1. Field of the invention

The present invention relates to a video and audio sharing device, more particularly one, which includes a wireless receiving and transmitting unit, and allows video and audio data contained in computers to be broadcasted through various broadcasting devices such as TV, overhead projectors, and high-fidelity equipments; the sharing device can be connected to internet so as to obtain video and audio data from internet as well as serving as a router so that nearby computers can have access to internet; the sharing device can receive video signals transmitted from a webcam for various broadcasting devices to show the video images taken with the webcam, thus allowing the users to monitor a distant place with the broadcasting devices.

### 2. Brief Description of the Prior Art

Personal computers have become a necessity of modern life, which can help people to easily manage data, handle many things, and allow people to see a film and listen to music, search the internet, and share video and audio information on various video and audio sharing sites, e.g. You Tube, whose number has been rapidly increasing. However, the monitors of computers are usually relatively small-sized as compared with TV, and can cause the viewers' eyesight to deteriorate. In addition, computers are usually used with low-cost speakers, which can't produce high quality sound like high-fidelity equipments. Consequently, the sound and image quality won't be high enough if multimedia video and audio information is broadcasted through common personal computers.

Therefore, it is a main object of the present invention to provide a video and audio sharing device, which allows video and audio data contained in computers and storage media or obtained from internet to be broadcasted through other broadcasting devices, e.g. TV, overhead projectors, and high-fidelity equipments, thus overcoming the above problems.

### SUMMARY OF THE INVENTION

A video and audio sharing device in accordance with an embodiment of the present invention includes a central processing unit, an input jack unit, a video and audio coding and decoding unit, a video and audio output module, several output jacks, a wireless receiving and transmitting unit, and an antenna connected to the wireless receiving and transmitting unit. The video and audio sharing device can be connected to computers and storage media through the input jack unit, and can be connected to various broadcasting devices, e.g. TV, overhead projectors, high-fidelity equipments, and speakers, which have larger screens, higher image quality or higher sound quality than the computers. Secondly, the sharing device can be connected to internet through a cable so as to obtain video and audio data from internet; or alternatively, the video and audio sharing device can obtain video and audio signals from other broadband routers, video and audio sharing devices, IP sharers or wireless stations; thus, the and audio signals can be broadcasted through various broadcasting devices connected to the sharing device. Thirdly, the video and audio sharing device can be connected to internet through a cable to serve as a router so that nearby computers can have access to internet through the video and audio sharing device; furthermore, several such sharing devices can be positioned within transmission range of each other to form a local area network. Fourthly, the sharing device can receive video signals transmitted from a webcam through the wireless receiving and transmitting unit, and broadcasting devices can be connected to the video and audio output module of the sharing device to show the video images taken with the webcam, thus allowing the users to monitor a distant place with the broadcasting devices.

### BRIEF DESCRIPTION OF THE DRAWINGS

The present invention will be better understood by referring to the accompanying drawings, wherein:
Fig. 1 is a perspective view of a video and audio sharing device of the present invention,
Fig. 2 is another perspective view of the video and audio sharing device of Fig. 1,
Fig. 3 is a structural block diagram of the video and audio sharing device of the present invention,
Fig. 4 is a structural block diagram of the remote control of the present invention,
Fig. 5 is a view illustrating a way to use the present invention,
Fig. 6 is a view illustrating another way to use the present invention,
Fig. 7 is a view illustrating still another way to use the present invention, and
Fig. 8 is a view illustrating yet another way to use the present invention.

### DETAILED DESCRIPTION OF THE PREFERRED EMBODIMENTS

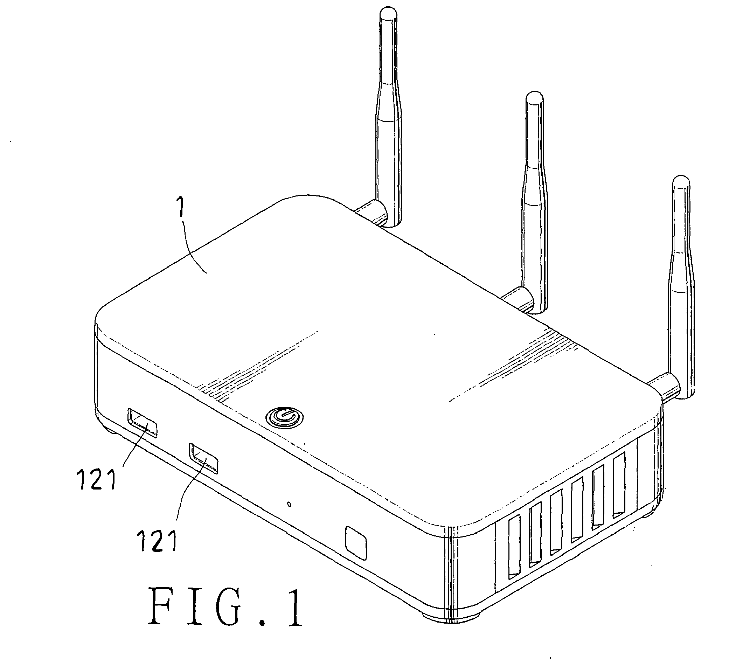

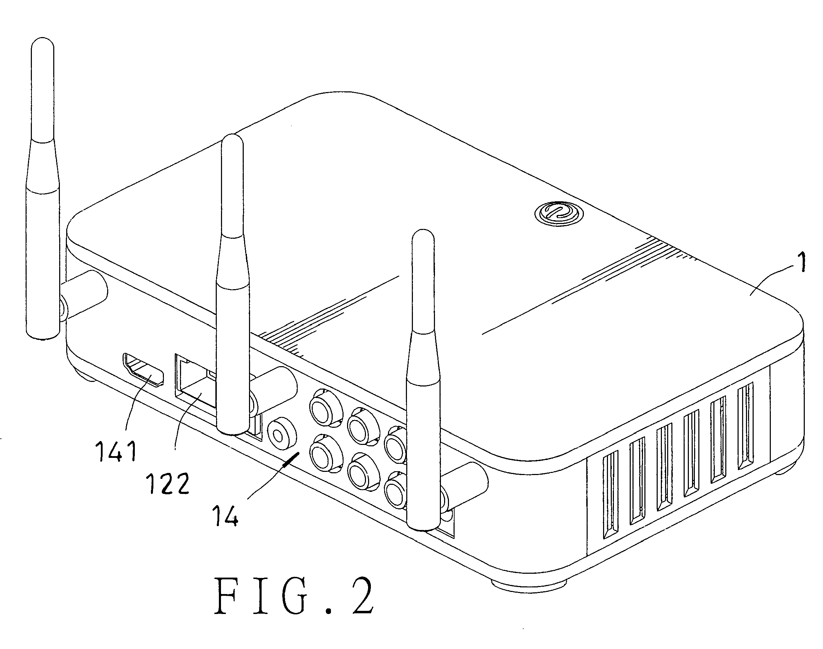

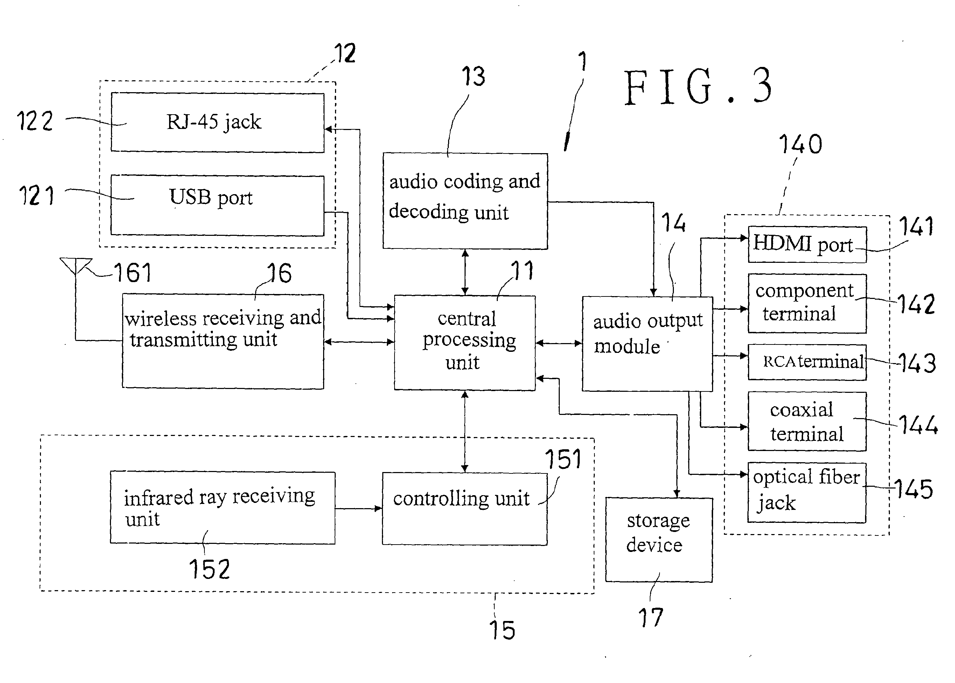

Referring to Fig. 1 to Fig. 3, a preferred embodiment 1 of a video and audio sharing device of the present invention includes a central processing unit 11, an input jack unit 12, a video and audio coding and decoding unit 13, a video and audio output module 14, a controlling module 15 to be used together with a remote control 2, and a wireless receiving and transmitting unit 16.

The input jack unit 12 is connected to the central processing unit 11, and includes several USB ports 121, and a RJ-45 jack 122.

The video and audio coding and decoding unit 13 is connected to the central processing unit 11. The video and audio output module 14 is connected to the central processing unit 11 as well as the video and audio coding and decoding unit 13. The video and audio output module 14 has several different output jacks 140 to be connected to broadcasting devices for images and audio signals to be output and broadcasted; the output jacks 140 include HDMI ports 141, component terminals 142 for component video, RCA terminals 143, coaxial terminals 144, and optical fiber jacks 145.

The controlling module 15 includes a controlling unit 151, and infrared ray receiving unit 152. The controlling module 15 is connected to the central processing unit 11 at the controlling unit 151 thereof. The infrared ray receiving unit 152 is connected to the controlling unit 151 to receive infrared ray signals transmitted from the remote control 2.

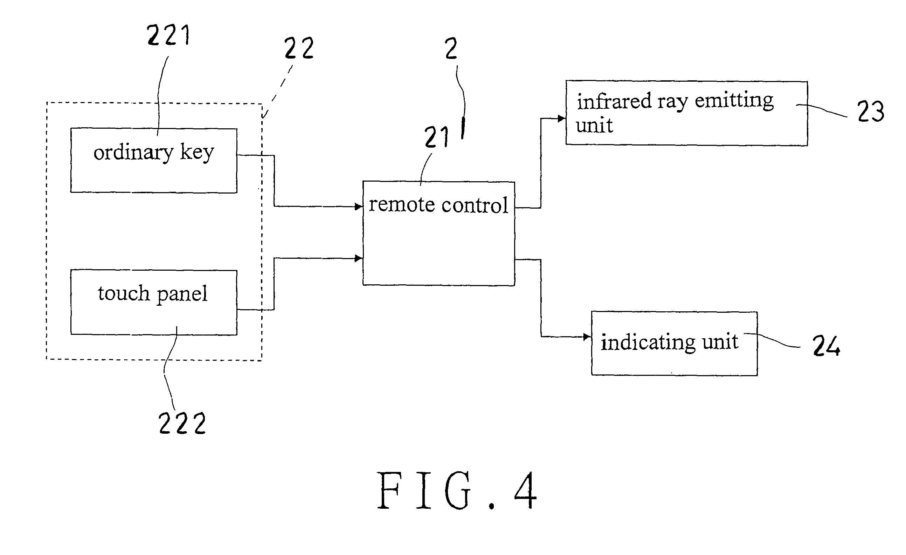

Referring to Fig. 4, the remote control 2 includes a controlling unit 21, an input unit 22, and an infrared ray emitting unit 23 to emit infrared ray signals, which will be received with the infrared ray receiving unit 152 of the controlling module 15 so as to control the video and audio sharing device 1. Both the input unit 22 and the infrared ray emitting unit 23 are connected to the controlling unit 21. The input unit 22 of the remote control 2 can be a touch panel 222 or include several ordinary keys 221. The remote control 2 further has an indicating unit 24, which is connected to the controlling unit 21; the indicating unit 24 is preferably a laser module, which can serve as a laser pointer in a briefing.

The wireless receiving and transmitting unit 16 is connected to the central processing unit 11, and is equipped with an antenna 161. The wireless receiving and transmitting unit 16 can transmit and receive signals of a frequency between 2.4 GHz and 5.8 GHz in accordance with 802.11n standard through the antenna 161.

The video and audio sharing device 1 further includes a memory device 17, which is connected to the central processing unit 11 to store video and audio information.

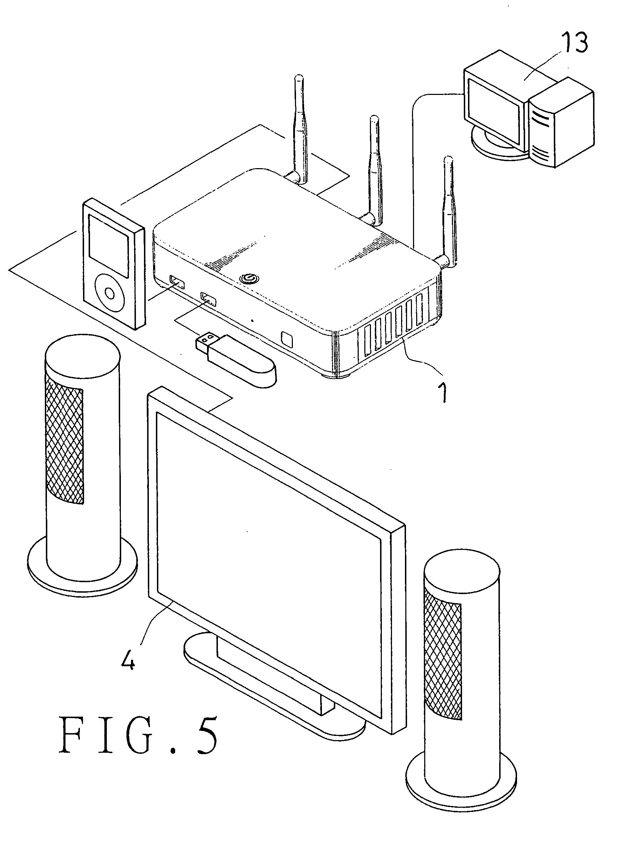

In use, referring to Fig. 5, storage media with USB ports such as portable memory cards and MP3 players can be connected to the USB ports 121 of the input jack unit 12 of the video and audio sharing device 1. Or alternatively, a computer 3 can be connected to the RJ-45 jack 122 of the input jack unit 12. And, broadcasting devices 4 are connected to the output jacks 140 of the video and audio output module 14, which include HDMI ports 141, component terminals 142 for component video, RCA terminals 143, coaxial terminals 144, and optical fiber jacks 145; the broadcasting devices 4 can be TV, overhead projectors, high-fidelity equipments, and speakers. Thus, video and audio messages can be sent to the central processing unit 11 through the input jack unit 12. Next, the central processing unit 11 will process the signals, and the video and audio coding and decoding unit 13 will convert digital video and audio signals into analogous ones. And, the analogous signals will be sent to the video and audio output module 14, and the video and audio output module 14 will carry out division according to digital signals transferred from the central processing unit 11. Therefore, the multimedia video and audio information in the computer 3/various storage media will be transferred to the various broadcasting devices 4 through the video and audio output module 14, and broadcasted through the broadcasting device 4. At the same time, the remote control 2 can be used to control the video and audio sharing device 1 with the infrared ray emitting unit 23 sending instructions, and the infrared ray receiving unit 152 of the controlling module 15 of the video and audio sharing device 1 receiving the instructions. In addition, the multimedia video and audio information can be transferred to and stored in the memory device 17 connected to the central processing unit 11.

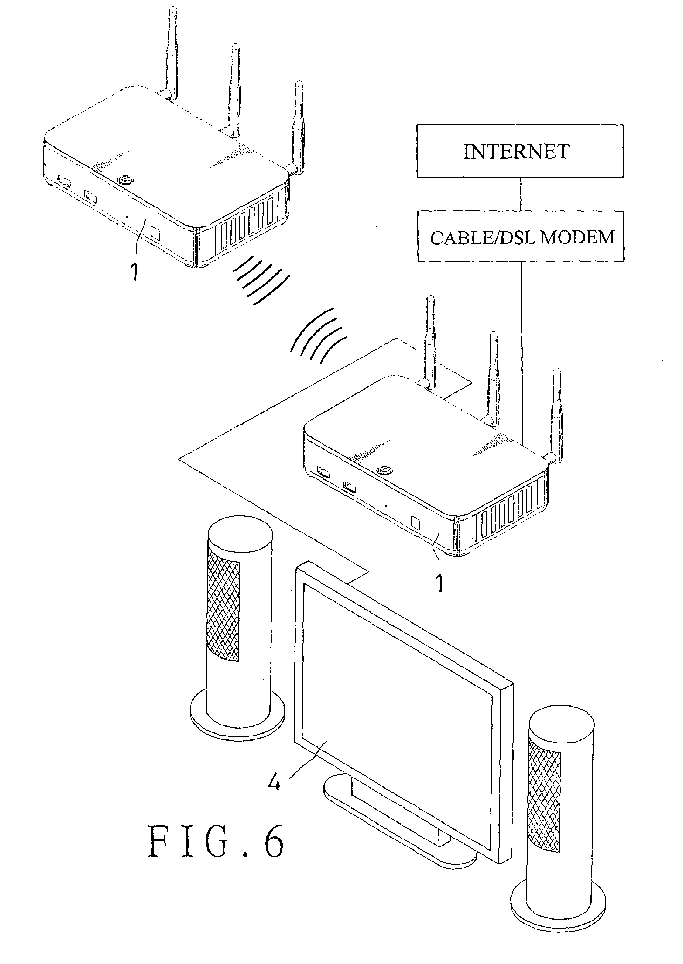

Fig. 6 illustrates another way to use the video and audio sharing device 1 of the present invention; the video and audio sharing device 1 is connected to internet through a cable and the RJ-45 jack 122 of the input jack unit 12 so that the video and audio sharing device 1 can obtain video and audio data from internet. In addition, the video and audio sharing device 1 can obtain signals from other broadband routers, video and audio sharing devices, IP sharers or wireless stations through the antenna 161 and the wireless receiving and transmitting unit 16; the signals will be transferred to the central processing unit 11, and converted into analogous signals by the video and audio coding and decoding unit 13. Next, the analogous signals will be sent to the video and audio output module 14, and the video and audio output module 14 will carry out division according to digital signals transferred from the central processing unit 11 so that the video and audio signals are broadcasted through broadcasting devices 4. The remote control 2 can be used to control the multimedia video and audio data at the same time, and the multimedia video and audio data can be stored in the storage device 17 connected to the central processing unit 11.

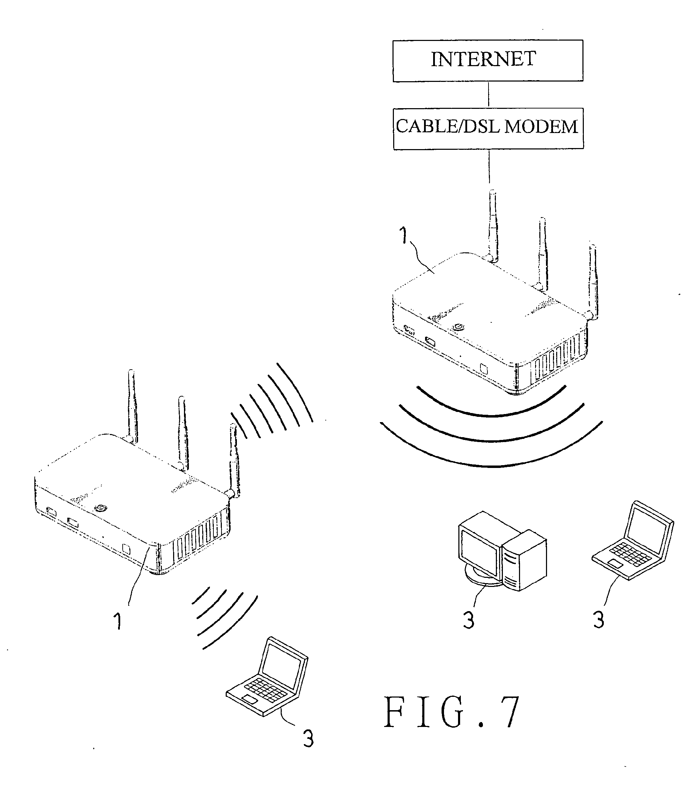

Fig. 7 illustrates still another way to use the video and audio sharing device 1 of the present invention; the video and audio sharing device 1 is connected to internet through a cable and the RJ-45 jack 122 of the input jack unit 12 so as to serve as a router with signals being received and transmitted through the antenna 161 and the wireless receiving and transmitting unit 16; thus, nearby computers can have access to internet through the video and audio sharing device 1. Furthermore, other such video and audio sharing devices can be positioned within transmission range of the first one to form a local area network.

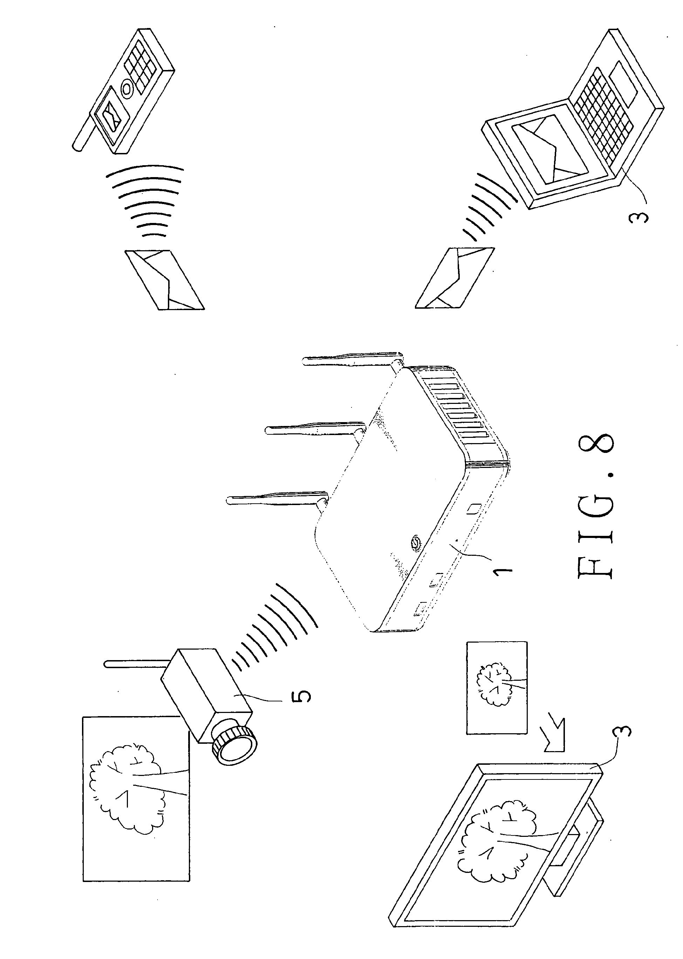

Fig. 8 illustrates yet another way to use the video and audio sharing device 1 of the present invention, wherein the wireless receiving and transmitting unit 16 receives video signals transmitted from a webcam 5 through the antenna 161, and broadcasting devices 4 can be connected to the video and audio output module 14 either wirelessly or by cables to show the video images taken with the webcam 5, thus allowing the users to monitor a distant site through the webcam 5, the video and audio sharing device 1, and the broadcasting devices 4. And, should unusual situations such as unauthorized entry are detected through the webcam 5, the messages will be packaged with the central processing unit 11, and sent to the users' cellular phones through the RJ-45 jack 122, the cable connected to the RJ-45 jack 122, internet, and the telecommunication stations; thus, the above combination can serve as a wireless digital security system.

From the above description, it can be seen that the present invention has the following advantages over the prior art:
1. The video and audio sharing device of the present invention can be connected to computers and storage media through the input jack unit, and can be connected to various broadcasting devices, e.g. TV, overhead projectors, high-fidelity equipments, and speakers, which have larger screens, higher image and sound quality than the computers. Therefore, the users will have more pleasure in watching a film or listening to music.
2. The video and audio sharing device can be connected to internet through a cable so as to obtain video and audio data from internet. Or alternatively, the video and audio sharing device can obtain video and audio signals from other broadband routers, video and audio sharing devices, IP sharers or wireless stations. Therefore, the video and audio signals can be broadcasted through various broadcasting devices connected to the video and audio sharing device, and they can be stored in the memory device of the video and audio sharing device.
3. The video and audio sharing device can be connected to internet through a cable to serve as a router so that nearby computers can have access to internet through the video and audio sharing device. Furthermore, several such video and audio sharing devices can be positioned within transmission range of each other to form a local area network. Therefore, the present invention is practical.
4. The video and audio sharing device of the present invention can receive video signals transmitted from a webcam through the antenna and the wireless receiving and transmitting unit, and broadcasting devices can be connected to the video and audio output module of the sharing device to show the video images taken with the webcam, thus allowing the users to monitor a distant place with the broadcasting devices.

## Claims

1. A video and audio sharing device, comprising
a central processing unit 11;
an input jack unit 12 connected to the central processing unit 11;
a video and audio coding and decoding unit 13 connected to the central processing unit 11;
a video and audio output module 14 connected to the central processing unit 11; the video and audio coding and decoding unit 13 being connected to the video and audio output module 14;
a plurality of output jacks 140 connected to the video and audio output module 14 for images and audio signals to be output therethrough;
a wireless receiving and transmitting unit 16 connected to the central processing unit11; and
an antenna 161 connected to the wireless receiving and transmitting unit 16.

2. The video and audio sharing device as claimed in claim 1, wherein the input jack unit 12 is an USB port 121.

3. The video and audio sharing device as claimed in claim 1, wherein the input jack unit 12 is a RJ-45 jack 122.

4. The video and audio sharing device as claimed in claim 1 further comprising a storage device 17, which is connected to the central processing unit 11 to store video and audio information.

5. The video and audio sharing device as claimed in claim 1 further comprising a controlling module 15 connected to the central processing unit 11 to be used together with a remote control 2;
the controlling module 15 including a controlling unit 21, and infrared ray receiving unit 152; the controlling module 15 being connected to the central processing unit 11 at the controlling unit 21 thereof; the infrared ray receiving unit 152 being connected to the controlling unit 21;
the remote control 2 including a controlling unit 21, an input unit 22, and an infrared ray emitting unit 152; both the input unit 22 and the infrared ray emitting unit 152 being connected to the controlling unit 21 of the remote control 2.

6. The video and audio sharing device as claimed in claim 5, wherein the input unit 22 of the remote control 2 includes a plurality of keys 221.

7. The video and audio sharing device as claimed in claim 5, wherein the input unit 22 of the remote control 2 is a touch panel 222.

8. The video and audio sharing device as claimed in claim 5, wherein the remote control 2 has an indicating unit 24, which is connected to the controlling unit 151 of the remote control 2.

9. The video and audio sharing device as claimed in claim 1, wherein the input jack unit 12 includes a RJ-45 jack 122;
the video and audio sharing device being capable of being connected to an internet through the RJ-45 jack 122 so that the video and audio sharing device serves as a router for signals to be received and transmitted through the antenna 161 and the wireless receiving and transmitting unit 16.

10. The video and audio sharing device as claimed in claim 1, wherein the wireless receiving and transmitting unit 16 receives video signals transmitted from a webcam 5 through the antenna 161, thus allowing one to monitor a distant site through the webcam 5 and the video and audio sharing device.

## Amended claims

### Amended claims in accordance with Rule 137(2) EPC.

**1.** A video and audio sharing device, comprising
a central processing unit (11);
an input jack unit (12) connected to the central processing unit (11);
a video and audio coding and decoding unit (13) connected to the central processing unit (11);
a video and audio output module (14) connected to the central processing unit (11); the video and audio coding and decoding unit (13) being connected to the video and audio output module (14);
a plurality of output jacks (140) connected to the video and audio output module (14) for images and audio signals to be output therethrough;
a wireless receiving and transmitting unit (16) connected to the central processing unit (11);
an antenna (161) connected to the wireless receiving and transmitting unit (16);
**characterized in that**
a controlling module (15) is connected to the central processing unit (11) to be used together with a remote control (2);
wherein the controlling module (15) includes a controlling unit (151), and infrared ray receiving unit (152); the controlling module (15) being connected to the central processing unit (11) at the controlling unit (151) thereof; the infrared ray receiving unit (152) being connected to the controlling unit (151);
wherein the remote control (2) includes a controlling unit (21), an input unit (22), and an infrared ray emitting unit (23); both the input unit (22) and the infrared ray emitting unit (23) being connected to the controlling unit (21) of the remote control (2),
and wherein the input jack unit (12) includes an USB port (121) and a RJ-45 jack (122).
